# EUROPÄISCHE PATENTSCHRIFT

(11) **EP 3 094 691 B1**
(45) Veröffentlichungstag und Bekanntmachung des Hinweises auf die Patenterteilung: **08.05.2019**
(21) Anmeldenummer: 15700490.4
(22) Anmeldetag: 19.01.2015
(51) Int. Cl.: C09D 5/29, C09D 5/03, C09D 5/32, C09C 1/64, C09C 1/00, C09D 7/80, C08K 9/10, B05D 5/06, C09C 1/62

(54) **PULVERLACK IN PARTIKULÄRER UND AUSGEHÄRTETER FORM MIT EFFEKTPIGMENTEN SOWIE VERFAHREN ZUR HERSTELLUNG VON PULVERLACK MIT EFFEKTPIGMENTEN**
POWDER PAINT IN PARTICULATE AND CURED FORM WITH EFFECT PIGMENTS AND PROCESS FOR PREPARING POWDER PAINT WITH EFFECT PIGMENTS
PEINTURE EN POUDRE PARTICULAIRE ET SOUS FORME DURCIE AVEC PIGMENTS À EFFETS ET PROCÉDÉ DE FABRICATION DE PEINTURE EN POUDRE AVEC PIGMENTS À EFFETS

(30) Priorität: 19.01.2014 EP 14151697
(43) Veröffentlichungstag der Anmeldung: 23.11.2016
(73) Patentinhaber: IGP Pulvertechnik AG, 9500 Wil (CH)
(72) Erfinder: MATTERN, René, 53175 Bonn (DE); BÜELER, Roman, CH-9247 Henau (CH); D'ANNA, Leo, CH-8500 Frauenfeld (CH)
(74) Vertreter: Hepp Wenger Ryffel AG
(86) Internationale Anmeldenummer: PCT/EP2015/050853
(87) Internationale Veröffentlichungsnummer: WO 2015/107181

(56) Entgegenhaltungen:
- WO-A2-2005/063897
- DE-A1-102007 006 820
- DE-A1-102011 055 072

## Beschreibung

Die vorliegende Erfindung betrifft einen Pulverlack in partikulärer und ausgehärteter Form mit Effektpigmenten sowie Verfahren zur Herstellung von Pulverlack mit Effektpigmenten.

Aus dem Stand der Technik sind verschiedene mit Effektpigmenten versehene Pulverlacke sowie verschiedene Verfahren zu deren Herstellung bekannt. Effektpigmente werden in Pulverlacken zum Erzielen verschiedener optischer Effekte eingesetzt. Dabei stellt sich jeweils die Schwierigkeit, die Effektpigmente gleichmässig im Pulverlack zu verteilen und an oder in den Pulverkörnern nachhaltig zu fixieren, so dass nach der Pulverlackapplikation die ausgehärtete Pulverlackschicht auf dem Substrat ein gleichmässiges Erscheinungsbild und Funktion gewährleistet. Verschiedene Verfahren zur Veredelung von Pulverlacken mit Effektpigmenten sowie die entsprechenden mit Effektpigmenten versehenen Pulverlacke sind bekannt. Das einfachste Verfahren ist das so genannte "dry-blend"-Verfahren, wo eine entsprechende Menge an Effektpigmenten dem fertigen Basispulverlack zugefügt wird und in einem Mischvorgang eine homogene Verteilung der Effektpigmente in Basispulverlack erreicht wird. Nachteilig bei diesem Verfahren ist die mangelnde Entmischungsstabilität, welche sich insbesondere bei der Verarbeitung von grösseren Mengen beispielsweise in automatisierten Pulverlackieranlagen bemerkbar macht. Insbesondere bei einer grösseren beschichteten Fläche kann ein wolkenähnliches Erscheinungsbild entstehen, ausgelöst durch unterschiedliches Auflade- und Abscheideverhalten zwischen den Pulverpartikeln und den trocken zugemischten Effektpigmenten. Weitere Gründe liegen in der unterschiedlichen Dichte zwischen den Pulverlackpartikeln und den Effektpigmenten sowie der unterschiedlichen Partikelgrösse und Partikelform. Diese mangelnde Entmischungsstabilität macht die entsprechenden Pulverlacke nur bedingt geeignet für die Anwendung in der Architektur beispielsweise zum Beschichten von komplexen geometrischen, effektvollen Fassadenelementen.

Ein weiteres bekanntes Verfahren ist das so genannte "bonding", wo wiederum die Effektpigmente in einem Batchprozess dem Basispulverlack zugefügt werden. Im Unterschied zum "dry-blend"-Verfahren wird das Mischen jedoch in einem thermomechanischen Prozess durchgeführt. Durch die in einem Rührprozess erzeugte Reibungswärme wird der Basispulverlack im Mischbehälter aufgeheizt. Dabei ist die Temperatur so zu wählen, dass die einzelnen Partikel des Basispulverlackes bereits weich und klebrig werden, so dass die zu diesem Zeitpunkt zugegebenen Effektpigmente angebunden werden können. Der so gewonnene Pulverlack ist im Vergleich zu einem mit oben genanntem "dry-blend"-Verfahren gewonnenen Pulverlack deutlich stabiler gegen Entmischung. Nachteilig sind jedoch der aufwändige und nur batchweise durchzuführende Prozess sowie die schwierige Prozesskontrolle. Hierdurch gelingt die Anbindung der Effektpigmente an das Basispulver nur unvollständig. Somit tritt bei der Pulverapplikation wiederum eine Separierung zwischen Basispulver und nicht angebundenen Effektmittel auf, so dass auch hier, wenn auch weniger ausgeprägt als mit im "dry-blend"-Verfahren hergestelltem Pulverlack, eine streifige oder wolkige Oberfläche nach dem Einbrennen resultieren kann.

Des Weiteren sind so genannte modifizierte/stabilisierte Effektpigmente auf dem Markt erhältlich, welche bereits von einer Bindemittelschicht umgeben sind. Diese Effektpigmente allein sind jedoch noch nicht filmbildend. Solche modifizierten Effektpigmente müssen gemäss Herstellerangaben bereits bei der Herstellung der Pulverlackmischung zugegeben werden und wie die üblichen Pulverlackzutaten in einem Extruder mittels klassischer Extrusion gleichmässig vermischt und verbunden werden. Nachteilig an diesem Verfahren ist insbesondere der Umstand, dass die Effektpigmente durch die Verarbeitung im Extruder extremen Scherkräften ausgesetzt sind, so dass diese beschädigt und zerteilt werden. Entsprechend müssen mehr Effektpigmente eingesetzt werden, um effektvolle und zufriedenstellende Effekte zu gewährleisten. Unter Umständen kann sogar das gewünschte Effektbild nicht mit den verfügbaren, stabilisierten Pigmenten erzielt werden.

DE 10 2011 055 072 A1 offenbart nasschemisch oxidierte Aluminiumeffektpigmente mit einer umhüllenden organischen Polymerschicht. Die organische Polymerschicht ist vorzugsweise eine nicht reaktive organische Polmyerschicht, welche im ausgehärteten Zustand nicht mit dem Bindemittel eines Lackes reagiert.

DE 10 2007 006820 A1 beschreibt elektrisch nicht leitfähige Metalleffektpigmente, welche in Form von Metalleffektpigmenten mit einem Metallkern und eine umhüllende homogene Kunstharzbeschichtung bereitgestellt sind. Diese Kunstharzbeschichtung umfasst keine Ausgangsstoffe eines Pulverlackes.

WO 2005/063897 A2 offenbart Metallpigmente mit Beschichtungen und ein Masterbatch von Metallpigmenten. Diese Beschichung der Metallpigmenten umfasst keine Ausgangsstoffe des Pulverlackes.

Es ist Aufgabe der Erfindung, die Nachteile des Standes der Technik zu überwinden. Insbesondere soll einen Pulverlack in partikulärer Form zur Verfügung gestellt werden, welcher sich in der Applikation durch eine hohe Entmischungsstabilität auszeichnet.

Schliesslich soll ein Verfahren zur Verfügung gestellt werden, welches ein einfaches und kontrolliertes Herstellen von Pulverlacken mit Effektpigmenten mit einer hohen Gleichmässigkeit erlaubt.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Ein erfindungsgemässer Pulverlack in partikulärer Form mit Effektpigmenten zeichnet sich dadurch aus, dass die Effektpigmente im Wesentlichen mit einer filmbildenden Lackmatrix benetzt und umhüllt sind. Ein solcher Pulverlack ist zur Filmbildung befähigt. Dabei wird unter "im Wesentlichen mit der Lackmatrix benetzt und umhüllt" verstanden, dass die Oberfläche der Effektpigmente wenigstens zu 50%, insbesondere wenigstens zu 75%, bevorzugt wenigstens zu 90% von Lack belegt ist. Durch diese Umhüllung der Effektpigmente mit der Lackmatrix kann gewährleistet werden, dass die umhüllten Effektpigmente bei der elektrostatischen Applikation ein ähnliches Auflade- und Abscheideverhalten aufweisen und sich insofern nur sehr schwer bis gar nicht von den Pulverlackpartikeln entmischen können. Ebenso wird durch die Umhüllung der Effektpigmente mit der Lackmatrix im Lack gewährleistet, dass bei einer späteren Applikation und nachfolgendem Einbrennen des Pulverlackes auf der gesamten Fläche ein gleichmässiger Effekt erzielt werden kann. Die aus den Pulverlacken gemäss dem Stand der Technik bekannten Wolken- und Streifenbildung wurden so eliminiert. Unter einer Lackmatrix werden die zusammenvermischten Ausgangsstoffe des Pulverlackes ausgenommen der Effektpigmente verstanden. Die zusammenvermischten Ausgangsstoffe des Pulverlackes bilden nach dem Einbrennprozess einen duroplastischen Lackfilm aus. Dementsprechend umfasst eine Lackmatrix alle Komponenten, welche für die Ausbildung einer Lackschicht notwendig sind. Die Lackmatrix ist also als identisch zu einem Lack zu verstehen.

Wenigstens 80%, insbesondere wenigstens 90%, bevorzugt wenigstens 95% aller Effektpigmente können mit der Lackmatrix überzogen sein. Dieser grosse Anteil an mit Lack überzogenen Effektpigmenten gewährleistet eine einfachere Handhabung des Pulverlackes.

Die Bestimmung ob und welcher Anteil der Effektpigmente mit Lack überzogen ist, erfolgt beispielsweise optisch an einer Probe des Pulverlacks. Dabei ist darauf zu achten, dass die Probe derart gross gewählt werden muss, dass eine statistische Aussage möglich ist.

Die Grösse der Effektpigmente kann einen Mittelwert zwischen 5 µm und 120 µm, insbesondere zwischen 10µm und 100 µm, bevorzugt zwischen 30 µm und 100 µm liegen. Durch eine relativ genaue Eingrenzung der Grösse der Effektpigmente kann gewährleistet werden, dass eine gleichbleibende Effektwirkung bei der Auftragung des Pulverlackes gewährleistet werden kann. Dabei kann die Bestimmung der Grösse der Effektpigmente beispielsweise an einer definierten Probe nach dem Auslösen des Lackes erfolgen. Die Grösse wird dann anhand des Äquivalent-Durchmessers bestimmt. Dieser Durchmesser kann beispielsweise mittels entsprechender Siebe oder durch mikroskopische Betrachtung und Messung bestimmt werden.

Die Grösse der Effektpigmente kann einer Normverteilung mit einem Mittelwert und einer Standardabweichung σ1 kleiner oder gleich 50%, insbesondere kleiner oder gleich 30%, bevorzugt kleiner oder gleich 10% des Mittelwerts entsprechen. Durch die Grössenverteilung der Effektpigmente mit einer nur geringen Standardabweichung kann sichergestellt werden, dass der gewünschte Effekteindruck auf einer beschichteten Fläche möglichst gleichmässig zum Ausdruck kommt. Die Bestimmung der Grössenverteilung der Effektpigmente erfolgt wiederum an einer definierten Probe nach Auslösen des Lackes.

Weniger als 40%, insbesondere weniger als 20%, bevorzugt weniger als 10% der Effektpigmente können eine Bruchkante aufweisen. Dadurch, dass nur ein sehr geringer Anteil der Effektpigmente eine Bruchkante aufweist, kann gewährleistet werden, dass die Effektpigmente nicht oder nur wenig beschädigt sind und noch immer ihre ursprüngliche Form aufweisen. Dabei ist jedoch zu berücksichtigen, dass bei einem üblichen Herstellungsprozess von Pulverlack ein Schritt des Vermahlens benötigt wird, um schlussendlich das zu verarbeitende Pulverlack-Pulver herzustellen. Bei einem solchen Mahlprozess kann es durchaus vorkommen, dass das eine oder andere Effektpigment beschädigt wird. Dadurch, dass jedoch nur ein sehr geringer Anteil von beschädigten Effektpigmenten vorhanden ist, kann wiederum eine gleichmässige Effekterscheinung gewährleistet werden. Ausserdem wird dadurch gewährleistet, dass der Pulverlack eine ausgezeichnete Witterungs- und Umweltbeständigkeit, insbesondere Lauge- oder Säurebeständigkeit, aufweist. Die Bestimmung der Anteile an Effektpigmenten mit Bruchkante erfolgt vorzugsweise wiederum an einer definierten Probe nach Auslösen des Lackes. Das Erkennen einer Bruchkante wird vorzugsweise mittels Lichtmikroskopie vorgenommen.

Der Volumenanteil der Effektpigmente kann zwischen 1% bis 50%, insbesondere zwischen 1% bis 30%, bevorzugt zwischen 1% und 10% vom Gesamtvolumen des Pulverlackes betragen. Durch den entsprechenden Anteil an Effektpigmenten kann gewährleistet werden, dass eine entsprechende Effektwirkung im ausgehärteten Pulverlack sichtbar wird. Die Bestimmung des Volumenanteils kann wiederum an einer definierten Probe nach Auslösen des Lackes erfolgen.

Die Effektpigmente können ausgewählt sein aus der Liste umfassend:
- Metalleffektpigmente,
- Perlglanzpigmente oder Interferenzpigmente,
- Leuchtpigmente,
- Edelstahlpigmente,
- Kupferpigmente,
- Goldbronzepigmente,
- Glasflakes,
- Glashohlkugeln,
- Aluminiumpigmente.

Eine aus dem Pulverlack hergestellte Schicht kann eine Natronlaugenbeständigkeit der Stufe 1 nach einer Einwirkzeit von 30 min, der Stufe 1 bis Stufe 2 nach einer Einwirkzeit von 60 min und der Stufe 1 bis Stufe 3 nach einer Einwirkzeit von 90 min und 120 min zeigen. Dabei wird die Natronlaugenbeständigkeit wie folgt gemessen:
Auf die ausgehärtete Pulverlackschicht, wird 24 h nach dem Einbrennen des Lackfilms ein Tropfen einer 10 gew% igen Natronlauge aufgetröpfelt. In Abständen von 30, 60, 90 und 120 min wird die Natronlauge mit einem Weichen, saugfähigen Tuch entfernt und anschliessend die visuelle Veränderung der Oberfläche gem. den Vorgaben und der Vergleichsbilder der GSB-International e.V. bewertet:
Die visuelle Beurteilung erfolgt gemäss den Qualitätsrichtlinien 631 der Gütegemeinschaft für die Stückgutbeschichtung von Bauteilen (GSB International e.V.) Teil VII, Punkt 25, Ausgabe Mai 2013.

Die Effektänderung für Metallics wird nach folgendem Bewertungssystem gemäss ISO 4628 Teil 1 durchgeführt.
- Stufe 1: Kein Unterschied zwischen der getesteten Oberfläche und der Vorlage (nichtgetestete Oberfläche)
- Stufe 2: Kaum sichtbare Farb- und Effektveränderungen
- Stufe 3: Sichtbare Farb- und Effektveränderungen
- Stufe 4: Deutliche sichtbare Farb- und Effektveränderungen
- Stufe 5: Markante Farbveränderungen - vollständiger Effektverlust

**Vorgaben:**

| | |
|---|---|
| Konzentration der Natronlauge: | 10 Gew % = ca. 2,5 N |
| Prüf temperatur: | 23 °C +/- 2°C |
| Dauer der Belastung: | 30, 60, 90, 120 min |
| Beurteilung: | visuelle Beurteilung gem. den Qualitätsrichtlinien RL-631 der Gütegemeinschaft für die Stückgutbeschichtung von Bauteilen (GSB International e.V.) Teil VII, Punkt 25, Ausgabe Mai 2013 |

Des Weiteren kann die Lackmatrix Farbmittel, insbesondere Farbpigmente, aufweisen. Auf diese Weise ist der Pulverlack gefärbt.

Ein weiterer Aspekt der vorliegenden Erfindung ist ein Pulverlack in ausgehärteter Form hergestellt aus Pulverlack wie vorgängig beschrieben. Dabei weist ein solcher Pulverlack dieselben Eigenschaften und Merkmale auf, wie sie bereits für den Pulverlack in partikulärer Form beschrieben sind, insbesondere hinsichtlich Grösse, Grössenverteilung, Bruchkanten, Volumenanteil und Art der Effektpigmente.

Ein weiterer Aspekt der vorliegenden Erfindung betrifft ein Verfahren zur Herstellung von Pulverlack mit Effektpigmenten. Dabei wird mittels eines Extruders eine homogene thermoplastische Lackmasse aus den Ausgangsstoffen, insbesondere umfassend Bindemittel, Additive, Farbmittel und/oder Füllstoffe, hergestellt. Die Lackmasse wird nach dem Verlassen des Extruders vermahlen. Die Effektpigmente werden in einem Endbereich des Extruders zugegeben und in der viskosen Lackmasse homogenisiert. Dadurch, dass die Effektpigmente erst in einem Endbereich des Extruders zugegeben werden, werden diese nur noch geringfügig durch die im Extruder herrschenden Scherkräfte beaufschlagt und entsprechend nicht oder nur wenig beschädigt. Dabei wird unter einem Endbereich des Extruders derjenige Bereich verstanden, welcher sich in unmittelbarer Nähe zur Austrittsöffnung des Extruders befindet und eine Effektpigmentzudosierung noch ermöglicht. Der Abstand zwischen Effektpigmentzudosierung und der Düsenaustrittsöffnung kann, gemessen an der Gesamtlänge der Extruderwelle kleiner oder gleich der Hälfte, insbesondere kleiner oder gleich einem Drittel, bevorzugt kleiner oder gleich einem Viertel der Gesamtlänge betragen. Extruder werden in eine Dispergierungszone, in welcher Komponenten für eine thermoplastische Pulverlackmasse aufgeschmolzen und dispergiert werden, und einer Homogeniserungszone, in welcher die aufgeschmolzene thermoplastische Pulverlackmasse homogenisert wird, unterteilt. Die Effektpigmentzudosierung findet entsprechend in der Homogenisierungszone des Extruders statt, wo der Dispergierprozess der geschmolzenen Pulverlackmasse vollständig abgeschlossen ist. Dies hat zur Folge, dass die zudosierten Effektpigmente ausschliesslich dem Homogenisierungsprozess in der Homogenisierungszone unterzogen werden.

Die Effektpigmente können gravimetrisch oder volumetrisch dosiert zugegeben werden. Durch eine gravimetrische oder volumetrische Zugabe kann gewährleistet werden, dass genau diejenige Menge an Effektpigmenten verarbeitet wird, welche zu der im Extruder verarbeiteten Menge an Ausgangsstoffen benötigt werden.

Die Effektpigmente können unter Schutzgas, insbesondere unter Stickstoff, zugegeben werden. Die Verarbeitung unter Schutzgas reduziert das Explosionsrisiko, so dass ein sicherer, kontinuierlicher Betrieb gewährleistet werden kann.

Des Weiteren können die in dem Verfahren eingesetzten Ausgangsstoffe Farbmittel, insbesondere Farbpigmente, umfassen. Auf diese Weise werden gefärbte Pulverlacke mit Effektpigmenten hergestellt.

Ein erfindungsgemässer Pulverlack zeigt im direkten Vergleich zu den üblichen veredelten Lacken ("dry-blend"-Pulverlack oder mittels "bonding" hergestellter Pulverlack) eine geringere Separationsneigung zwischen dem Grundpulver und dem Effektpigment. Infolge dessen tritt bei der Pulverapplikation eine deutlich homogenere Abscheidung nahezu ohne Wolken- und Streifenbildung auf. Es versteht sich von selbst, dass bei diesem und den nachfolgenden Vergleichen jeweils identische Effektpigmente und identischen Lackrezepturen verwendet wurden.

Ein solcher Pulverlack zeigt unter standardisierten Applikationsbedingungen im direkten Vergleich zu den üblichen veredelten Lacken eine deutliche verbesserte Rückgewinnungsstabilität.

Der erfindungsgemässe Pulverlack zeigt bei der Applikation - auch bei unterschiedlichen Hochspannungen und Triboanwendungen - eine signifikant höhere Farbton- und Effektstabilität im direkten Vergleich zu den üblichen veredelten Lacken.

Der erfindungsgemässe Pulverlack zeigt gegenüber den üblichen veredelten Pulverlacken ein signifikant verbessertes Gesamteffektbild. Im direkten Vergleich von Pulverlackproben aus erfindungsgemässem Pulverlack zu Pulverlacken, welche durch klassische Einextrusion von Effektpigmenten in die Pulverlackmatrix bei gleicher Gesamtzusammensetzung hergestellt wurden, zeigen die erfindungsgemässen Pulverlacke in den nachfolgend aufgezeigten Bewertungskriterien A1, A2, A3 bei allen Punkten Benotungen von <= 2. Unter klassischer Einextrusion von Effepktpigmenten ist zu verstehen, dass die Effektpigmente auch den Dispergierungsprozess in der Dispergierungszone und gegebenenfalls auch einen dem Dispergierungprozess vorgelagerten Plastifizierungsprozess durchlaufen. Unter dem Plastifizierungsprozess wird allgemein das Aufschmelzen einer Pulverlackvormischung verstanden und unter dem Dispergierungsprozess ein Zerreiben/Zerteilung der vorliegenden Pigment- und Füllstoffagglomerate.

Die Beurteilung des Effektbildes von applizierten und eingebrannten Pulverlacken erfolgt visuell im direkten Vergleich der Proben:
Kriterien für die Beurteilung der Homogenität der Effektverteilung der beschichteten und eingebrannten Pulverlacke:
A1: Effektverteilung auf der Fläche (Streifen & Wolken)
A2: Effektanhäufung / -verarmung auf den Kanten
A3: Separierung auf der Rückseite (bei einseitiger Beschichtung).

Bedeutung der Bewertungsziffern:
1 - deutlich besser/höher/grösser als die Vergleichsprobe
2 - besser/höher/grösser als die Vergleichsprobe
3 - Vergleichbar mit der Vergleichsprobe
4 - schlechter/niedriger/kleiner als die Vergleichsprobe
5 - deutlich schlechter/niedriger/kleiner als die Vergleichsprobe

Mit dem vorgängig geschilderten erfindungsgemässen Verfahren zur Herstellung von Pulverlacken werden die Effektpigmente äusserst schonend in die Lackmatrix eingearbeitet und die Pigmentgrösse und Pigmentverteilung nur geringfügig beeinflusst. Die ursprünglichen Pigmentgrössen bleiben im Wesentlichen erhalten. Dieses hat einen positiven Einfluss auf die Glitzerfähigkeit (Sparkelingintensität) und die Körnigkeit (Graininess).

Im Gegensatz hierzu steht die bekannte Einextrusion mit Effektpigmentzugabe bereits zu Begin der Prozessstrecke des Extruders, wo die Pigmentteilchen durch das Durchlaufen des Dispergierprozesses sehr starken Scherbeanspruchungen ausgesetzt werden und die Effektpigmente dabei beschädigt und/oder zerteilt werden.

Im direkten Vergleich von Proben ausgehend von der gleichen Pigmenttype, derselben Pigmentgrössenverteilung, und einer identischen Lackmatrix zeigen die nach dem erfindungsgemässen Verfahren hergestellten Pulverlacke eine signifikant erhöhte Sparkelingintensität und Graininess.

Die Sparkelingintensität von Proben kann mit Hilfe des Gerätes BYK mac i 23 von der Fa. Altana /Byk bestimmt werden. Die Sparklingintensität gibt einen Messwert wieder über die Intensität der Lichtreflexion an den Effektpigmenten in einer Lackschicht. Die Intensitäten der Proben werden dabei unter 3 verschiedenen Betrachungswinkeln vermessen (15°, 45° 75°). Zusätzlich kann die Summe der Sparklingintensitäten berechnet werden.

Die Sparklingintensität ist dabei abhängig von der Pigmenttype, vom Pigmentanteil (Volumenanteil oder Gewichtsanteil) in der Lackschicht, der Grösse der Pigmentteilchen und der Orientierung der Teilchen.

Je grösser dieser Wert ist, desto stärker ist die Lichtreflexion und umso effektvoller erscheint die Lackschicht.

Die Sparkelingintensität des neuen Pulverlackes / Pulverlackfilms liegt dabei je nach Betrachtungswinkel signifikant >= 30% insbesondere >= 65% bevorzugt >= 100 % höher im Vergleich zu der klassischen Einextrusion von Effektpigmenten.

Die Graininess (Körnigkeit) von Proben kann dabei mit Hilfe des Gerätes BYK mac i 23 von der Fa. Altana /Byk bestimmt werden. Der Wert der Graininess beschreibt bei diffuser Beleuchtung das Vorhandensein von hell-dunkel Flächen und liefert somit quantitative Aussagen hierzu. Die Graininess wird beeinflusst durch die Pigmentart, die Pigmentgrösse und Grössenverteilung, die Pigmentorientierung und die Pigmentverteilung. Die Werte liegen dabei im Bereich von Graininess G = 0 (keine hell-dunkel Flächen) bis zu G = 15 (maximale Verteilung von hell-dunkel Flächen) .

Die Graininess des neuen Pulverlackfilms kann dabei signifikant >= 30%, insbesondere >= 65%, bevorzugt >= 100 %, höher liegen im Vergleich zu der klassischen Einextrusion von Effektpigmenten.

Anhand von Figuren, welche lediglich Ausführungsbeispiele darstellen, wird die Erfindung im Folgenden näher erläutert. Es zeigen:
- Figur 1a:: eine mikroskopische Aufnahme einer Probe aus einem Pulverlack mit Effektpigmenten nach dem Stand der Technik,
- Figur 1b:: eine zweite mikroskopische Aufnahme der Probe nach Figur 1a,
- Figur 2a:: eine mikroskopische Aufnahme einer Probe aus einem erfindungsgemässen Pulverlack mit Effektpigmenten,
- Figur 2b:: eine zweite mikroskopische Aufnahme der Probe nach Figur 2a,
- Figur 3:: eine Normalverteilung der Grösse der Effektpigmente eines erfindungsgemässen Pulverlackes und eines Pulverlackes nach dem Stand der Technik,
- Figur 4:: eine schematische Darstellung eines Extruders zur Herstellung des erfindungsgemässen Pulverlackes,
- Figur 5a:: eine Probe zur Bestimmung der Graininess und der Sparkelingintensität einer erfindungsgemässen Pulverlackschicht,
- Figur 5b:: eine Probe zur Bestimmung der Graininess und der Sparkelingintensität einer Pulverlackschicht nach dem Stand der Technik,
- Figur 6:: der direkte Vergleich der gemessenen Graininess der Proben gemäss den Figuren 5a und 5b,
- Figur 7:: der direkte Vergleich der gemessenen Sparkelingintensitäten der Proben gemäss den Figuren 5a und 5b,
- Figur 8a:: eine Probe zur Bestimmung der Natronlaugenbeständigkeit einer erfindungsgemässen Pulverlackschicht,
- Figur 8b:: eine Probe zur Bestimmung der Natronlaugenbeständigkeit einer Pulverlackschicht nach dem Stand der Technik,
- Figur 9:: eine Probe zur Bestimmung der Separationsneigung von Effektpigmenten eines Pulverlackes nach dem "dryblend"-Verfahren,
- Figur 10:: eine Probe zur Bestimmung der Separationsneigung von Effektpigmenten eines Pulverlackes nach dem "bonding"-Verfahren,
- Figur 11:: eine Probe zur Bestimmung der Separationsneigung von Effektpigmenten eines Pulverlackes nach dem erfindungsgemässen Verfahren,
- Figur 12:: eine Probe zur Beurteilung der Wolken- und Streifenbildung im uneingebrannten Zustand eines Pulverlackes nach dem "dry-blend"-Verfahren,
- Figur 13:: eine Probe zur Beurteilung der Wolken- und Streifenbildung im uneingebrannten Zustand eines Pulverlackes nach dem "bonding"-Verfahren,
- Figur 14:: eine Probe zur Beurteilung der Wolken- und Streifenbildung im uneingebrannten Zustand eines Pulverlackes nach dem erfindungsgemässen Verfahren,
- Figur 15a und b:: eine mikroskopische Aufnahme von Pulverlack-Pulver nach dem "dry-blend"-Verfahren in unterschiedlicher Vergrösserung,
- Figur 16a und b:: eine mikroskopische Aufnahme von Pulverlack-Pulver nach dem "bonding"-Verfahren in unterschiedlicher Vergrösserung,
- Figur 17a und b:: eine mikroskopische Aufnahme von Pulverlack-Pulver nach dem erfindungsgemässen Verfahren in unterschiedlicher Vergrösserung,
- Figur 18:: eine Darstellung der Rückgewinnungsstabilität nach unterschiedlichen Zeiten eines Pulverlackes nach dem "dry-blend"-Verfahren,
- Figur 19:: eine Darstellung der Rückgewinnungsstabilität nach unterschiedlichen Zeiten eines Pulverlackes nach dem "bonding"-Verfahren, und
- Figur 20:: eine Darstellung der Rückgewinnungsstabilität nach unterschiedlichen Zeiten eines Pulverlackes nach dem erfindungsgemässen Verfahren.

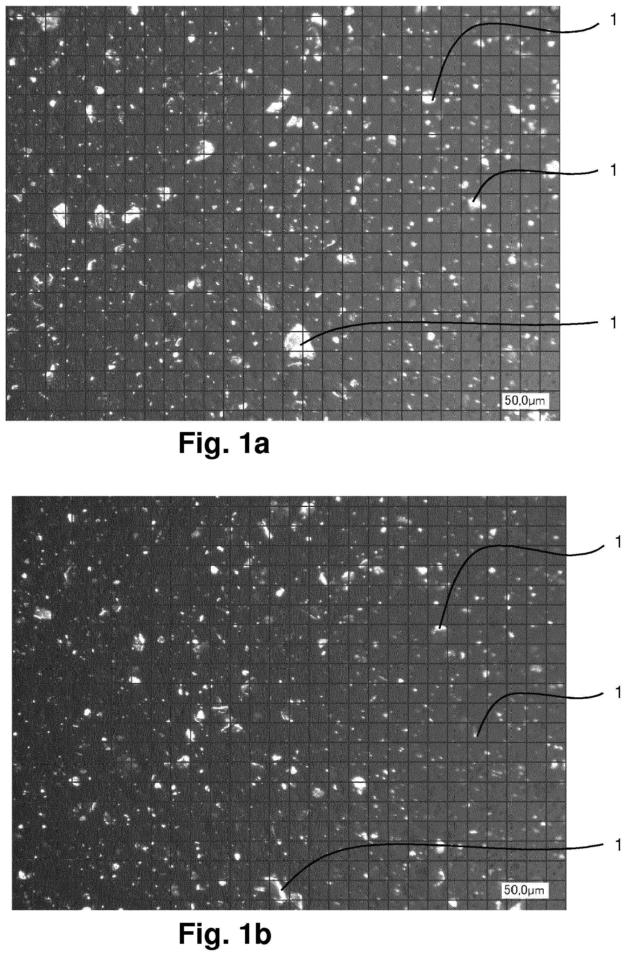

Die Figuren 1a und 1b zeigen eine erste und eine zweite mikroskopische Aufnahme einer Pulverlackschicht aus einem Pulverlack mit Effektpigmenten 1 nach dem Stand der Technik, wobei die Effektpigmente vollständig einextrudiert sind, d.h. die Effektpigmente wurden bereits im Anfangsbereich des Extruders zusammen mit den Ausgangsstoffen zur Herstellung des Pulverlackes beigegeben. Die Pulverlackschicht weist eine Dicke von 60 bis 80 µm auf. Die Effektpigmente 1 sind dabei deutlich als glänzende Partikel zu erkennen. Auffallend sind die unterschiedliche Form und Grösse der Effektpigmente 1. Diese unterschiedlichen Formen sind durch den im Stand der Technik bekannten Herstellungsprozess bedingt. Wenn beim Vermischen und Dispergieren der für den Pulverlack benötigten Ausgangsstoffe die Effektpigmente ebenfalls gleichzeitig im Extruder beigegeben werden, sind diese beim Durchlaufen durch den Extruder hohen Scherkräften ausgesetzt und werden beschädigt, beispielsweise gebrochen oder verformt. Entsprechend liegen die Effektpigmente 1 nicht mehr in ihrer ursprünglichen, meist scheibenförmig runden Form vor. Ausserdem wird die für die Effektwirkung wirksame Grösse der Effektpigmente reduziert.

Die in den Figuren 1a und 1b vorliegenden Effektpigmente 1 weisen ein geringe mittlere Grösse auf. Die kleinsten auf den beiden Abbildungen zu erkennenden Effektpigmente sind lediglich 5 µm und die grössten Effektpigmente 35 µm gross.

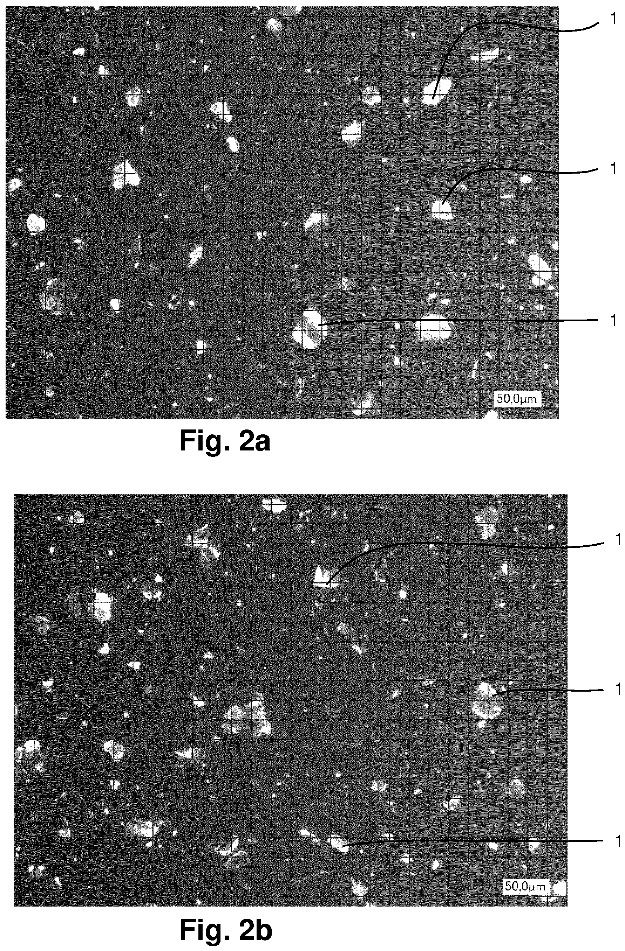

In den Figuren 2a und 2b sind eine erste und eine zweite mikroskopische Aufnahme einer Probe einer Pulverlackschicht aus einem erfindungsgemässen Pulverlack mit Effektpigmenten 1 in den gleichen Vergrösserungen wie in den Figuren 1a bzw. 1b dargestellt. Die Pulverlackschicht weist eine Dicke von 60 bis 80 µm auf. Die Effektpigmente 1 sind wiederum als glänzende Partikel erkennbar. Auffallend ist, dass im Vergleich zu den Figuren 1a und 1b die Effektpigmente 1 signifikant grösser und mehrheitlich unbeschädigt zu erkennen sind. Die für die Herstellung des Pulverlackes verwendeten Effektpigmente waren für beide Proben gemäss den Figuren 1 und den Figuren 2 gleich gross (D₁₀= 26-30 µm, D₅₀= 63-71 µm, D₉₀= 100-108 µm). Es zeigt sich jedoch, dass durch ein schonenderes Einbringen der Effektpigmente in den Pulverlack die Effektpigmente nur geringfügig beschädigt wurden und entsprechend grösser sind.

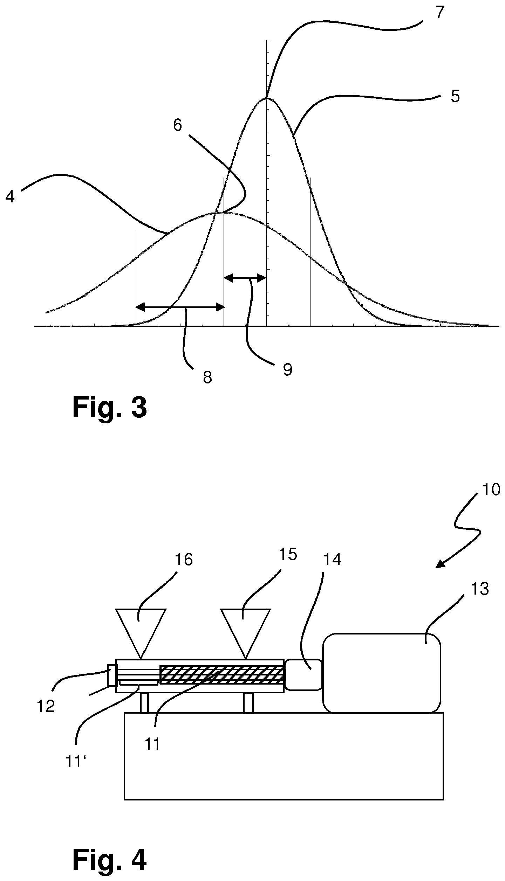

Die Figur 3 zeigt eine Normalverteilung der Grösse der Effektpigmente 1 (siehe Figuren 1 und 2) eines erfindungsgemässen Pulverlackes und eines Pulverlackes nach dem Stand der Technik, wobei für letzteres die Effektpigmente vollständig einextrudiert sind, d.h. die Effektpigmente wurden bereits im Anfangsbereich des Extruders beigegeben. Die für die Herstellung der Pulverlacke (erfindungsgemässer Pulverlack und Pulverlack nach dem Stand der Technik) verwendeten Effektpigmente waren für beide Pulverlacke gleich gross (D₁₀= 26-30 µm, D₅₀= 63-71 µm, D₉₀= 100-108 µm). Die flache Kurve 4 stellt die Grössenverteilung der Effektpigmente des Pulverlackes nach dem Stand der Technik dar, während die spitze Kurve 5 die Grössenverteilung der Effektpigmente des erfindungsgemässen Pulverlackes darstellt. Die mittlere Grösse 6 der flachen Kurve 4 der Effektpigmente des Pulverlackes nach dem Stand der Technik ist deutlich kleiner als die mittlere Grösse 7 der Effektpigmente des erfindungsgemässen Pulverlackes. Ebenso ist die Standardabweichung 8 der Effektpigmente des Pulverlackes nach dem Stand der Technik deutlich grösser als die Standardabweichung 9 der Effektpigmente des erfindungsgemässen Pulverlackes.

In der Figur 4 ist schematisch ein Extruder 10 zur Herstellung des erfindungsgemässen Pulverlackes dargestellt. Der Extruder 10 weist eine Extruderwelle 11 und einen Extruderkopf 12 auf. Die Extruderwelle 11 wird über eine Kupplung 14 von einem Motor 13 angetrieben. Durch die Drehbewegung der Extruderwelle werden die einzelnen Ausgangsstoffe, welche in einem Einfülltrichter 15 an motorseitigen Ende der Extruderwelle 11 in den Extruder 10 eingefüllt werden, zum Extruderkopf 12 transportiert. Gleichzeitig mit dem Transportieren der Ausgangsstoffe werden diese im Extruder 10 untereinander vermischt, plasitifiziert und homogen dispergiert. Durch die im Extruder 10 auftretenden Scherkräfte wird die Lackmasse aus Ausgangsstoffen erwärmt, wobei auch zusätzliche Wärmequellen denkbar sind. Erfindungsgemäss werden die Effektpigmente erst im letzten Abschnitt der Extruderwelle 11 dem Extruder 10 durch einen Einfülltrichter 16 zugeführt. Die Extruderwelle 11 kann in ihrem Endbereich 11', also dort wo die Effektpigmente zugeführt werden, speziell ausgestaltet sein, so dass die Effektpigmente schonend in die Lackmasse eingearbeitet werden. Die dargestellte Extruderwelle weist im Endbereich 11' nur noch einen Homogenisierungszone auf, welche die Effektpigmente schonend in die homogene Lackmatrix einarbeitet. Es sind ebenfalls Extruder mit mehreren Extruderwellen denkbar.

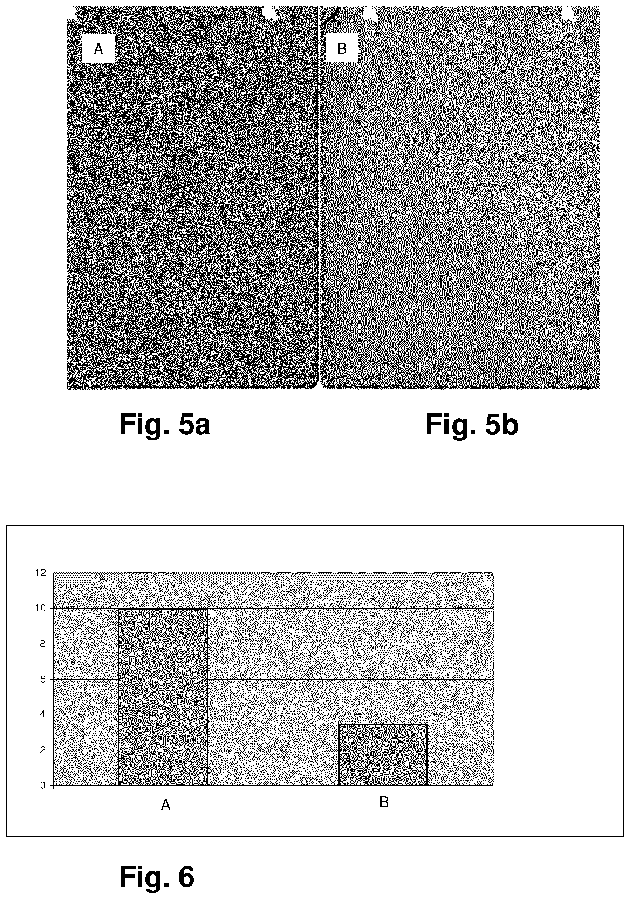

Die Figuren 5a und 5b zeigen je eine Probe zur Bestimmung der Graininess und der Sparkelingintensität einer erfindungsgemässen Pulverlackschicht (Figur 5a; A) und einer Probe einer Pulverlackschicht nach dem Stand der Technik mittels klassischer Einextrusion (Figur 5b; B). Beide Proben sind mit denselben Effektpigmenten, derselben Grössenverteilung der Effektpigmente und derselben Lackrezeptur hergestellt worden. Deutlich zu erkennen ist die unterschiedliche Körnigkeit.

Figur 6 zeigt nun den direkten Vergleich der gemessenen Graininess (Y-Achse) der Proben gemäss den Figuren 5a und 5b (X-Achse), wobei dabei das vorgängig beschriebene Messverfahren mit Hilfe des Messgerätes BYK mac i 23 von der Fa. Altana /Byk durchgeführt wurde. Die Werte mit der Bezeichnung A entsprechen dabei denjenigen der Probe mit der erfindungsgemässen Pulverlackschicht, während die Bezeichnung B eine Pulverlackschicht nach der klassischen Einextrusion kennzeichnet. Für die Probe A wurde eine Grainisess mit einem Wert von ca. 10 für Probe B von ca. 3.5 ermittelt.

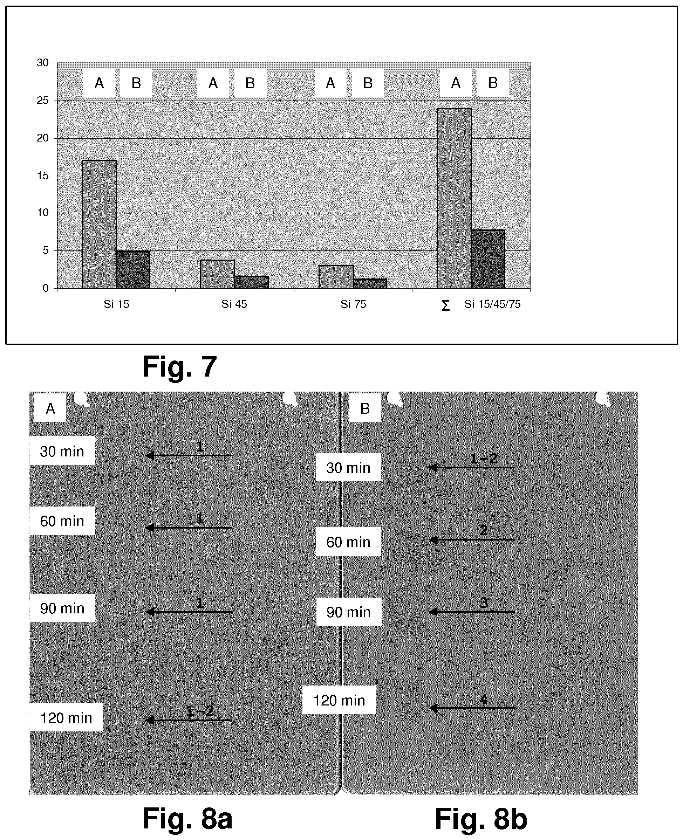

Figur 7 zeigt den direkten Vergleich der gemessenen Sparkelingintensitäten der Proben (Y-Achse) gemäss den Figuren 5a und 5b. Dabei wurde wiederum mit dem Messgerät BYK mac i 23 von der Fa. Altana /Byk gemessen. Dargestellt sind die Resultate der unterschiedlichen Betrachtungswinkel 10°, 45°, 75° sowie deren Summe ∑ (X-Achse).

Figur 8a zeigt eine Probe A zur Bestimmung der Natronlaugenbeständigkeit einer erfindungsgemässen Pulverlackschicht, während Figur 8b eine solche Probe B mit einer Pulverlackschicht nach dem Stand der Technik (Einextrusion) zeigt. Im direkten Vergleich dieser Proben (gleiche Pigmenttype, gleiche Pigmentgrössenverteilung, gleiche Lackmatrix) zeigten die nach dem erfindungsgemässen Verfahren hergestellten Pulverlackschicht eine signifikant verbesserte chemische Beständigkeit, insbesondere z.B. gegen Natronlauge bei aluminiumhaltigen Pigmenten oder Goldbronzen. Für Probe A entspricht die Natronlaugenbeständigkeit nach 30 min der Stufe 1, nach 60 min der Stufe 1, nach 90 min der Stufe 1 und nach 120 min der Stufe 1-2 (Fig. 8a). Für Probe B entspricht die Natronlaugenbeständigkeit nach 30 min der Stufe 1-2, nach 60 min der Stufe 2, nach 90 min der Stufe 3 und nach 120 min der Stufe 4 (Fig. 8b). Die visuelle Beurteilung im Natronlaugentest (Natronlaugenbeständigkeit) findet Anwendung wie bereits vorgängig gemäss den Qualitätsrichtlinien 631 der Gütegemeinschaft für die Stückgutbeschichtung von Bauteilen erläutert.

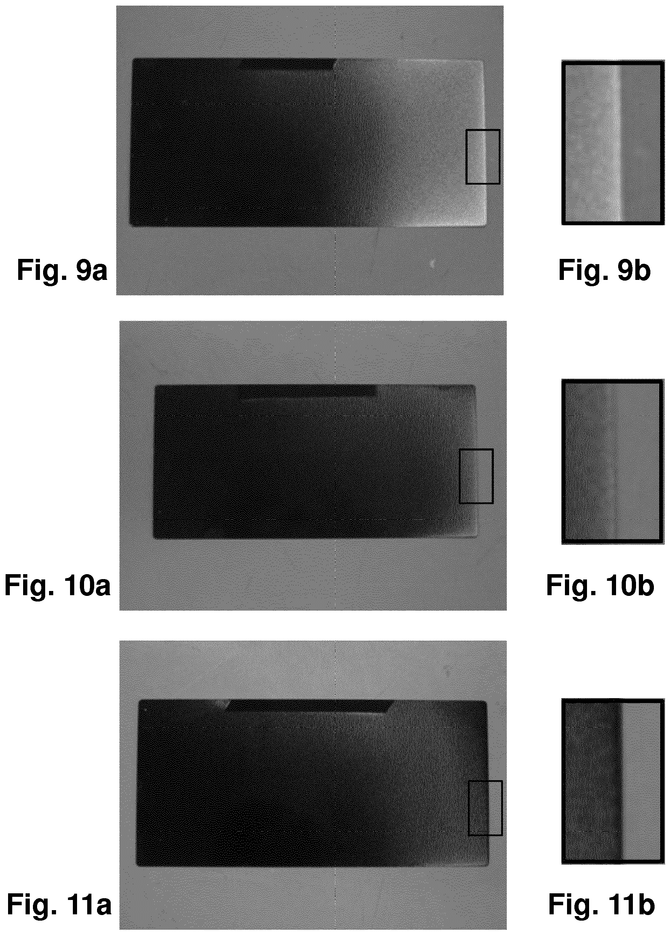

Die Figuren 9 a und b, 10 a und b und 11 a und b zeigen je eine Probe zur Bestimmung der Separationsneigung von Effektpigmenten eines Pulverlackes nach dem "dry-blend"-Verfahren (Figur 9), nach dem "bonding"-Verfahren (Fig. 10) und nach dem erfindungsgemässen Verfahren (Fig. 11). Figur 9b zeigt den Bereich des Rechtecks in Figur 9 a in vergrösserter Darstellung; der gleiche Zusammenhang besteht jeweils für die Figuren 10 a und 10 b sowie 11 a und 11 b.

In Figur 9 a ist ein sehr deutlicher Umgriff des Pulverlackes auf die Rückseite zu erkennen. Als Umgriff versteht sich die Anlagerung von separierten Effektpigmenten an Kanten der Rückseite einer beschichteten Oberfläche. Die separierten Effektpigmente folgen den Feldlinien des elektrischen Felds und lagern sich daher konzentriert an den Kanten der Rückseite an. Ausserdem zeigt sich eine sehr starke Separierung zwischen Effektmittel und dem Grundpulverlack. Diese Separierung ist besonders stark auf den Kanten, des zuvor schwarzen Bleches, sichtbar. Zudem ist eine überhöhte Menge an losen Effektpigmenten auf der Oberfläche sichtbar, welche durch die nachträgliche Anhaftung von separierten Effektpigmenten entsteht. Dies wird besonders deutlich in der vergrösserten Darstellung einer Kante des Blechs in Figur 9 b. Die Kante des Blechs ist auffallend hell, was durch die Anlagerung von separierten Effektpigmenten verursacht wird.

Auch in den Figuren 10 a und b ist ein deutlicher Umgriff des Pulverlackes auf der Rückseite erfolgt. Sichtbar ist eine leichte Separierung zwischen Effektmittel und dem Grundpulverlack. Diese ist auf den Kanten, des zuvor schwarzen Bleches, sichtbar. Eine überhöhte Menge an losen Effektpigmenten hat sich auf der Oberfläche abgeschieden, dies ist jedoch deutlich weniger stark ausgeprägt im Vergleich zu dem Dry-Blend-Pulverlack (siehe Figur 9 a und b).

In Figur 11 a erfolgte kein erkennbarer Umgriff des Pulverlackes auf der Rückseite. Es ist nahezu keine Separierung zwischen Effektmittel und dem Grundpulverlack zu erkennen. Ausserdem ist kein Nachflittern von losen Effektpigmenten erkennbar. Dies wird besonders deutlich in der vergrösserten Darstellung einer Kante des Blechs in Figur 11 b. Die Kante des Blechs ist dunkel. Damit hat keine Separierung von Effektpigmenten vom Grundpulver stattgefunden, was zu einer Anlagerung von separierten Effektpigmenten auf der Kante hätte führen können.

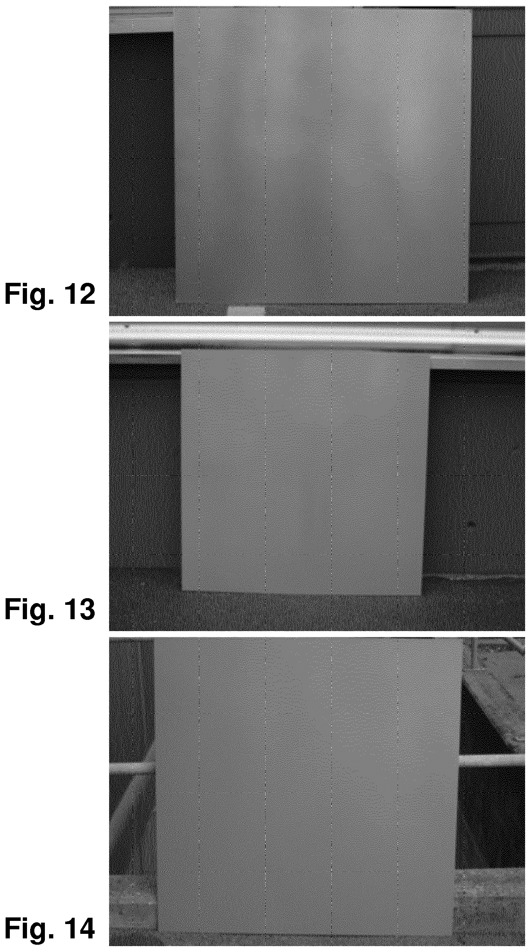

Die Figuren 12, 13 und 14 zeigen je eine Probe zur Beurteilung der Wolken- und Streifenbildung im uneingebrannten Zustand eines Pulverlackes nach dem "dry-blend"-Verfahren (Figur 12), nach dem "bonding"-Verfahren (Figur 13) und nach dem erfindungsgemässen Verfahren (Figur 14). Dabei wird unter standardisierten Bedingungen mit Hilfe der Automatikapplikation der Pulverlack aufgetragen.

In Figur 12 ist durch die Separierung von Effektpigment und dem Grundpulverlack eine starke Wolken- und Streifenbildung entstanden. In Figur 13 ist nur noch eine leichte Wolken- und Streifenbildung zu erkennen. In Figur 14 tritt keine oder nahezu keine Separierung auf. Es sind keine Wolken und keine Streifen erkennbar.

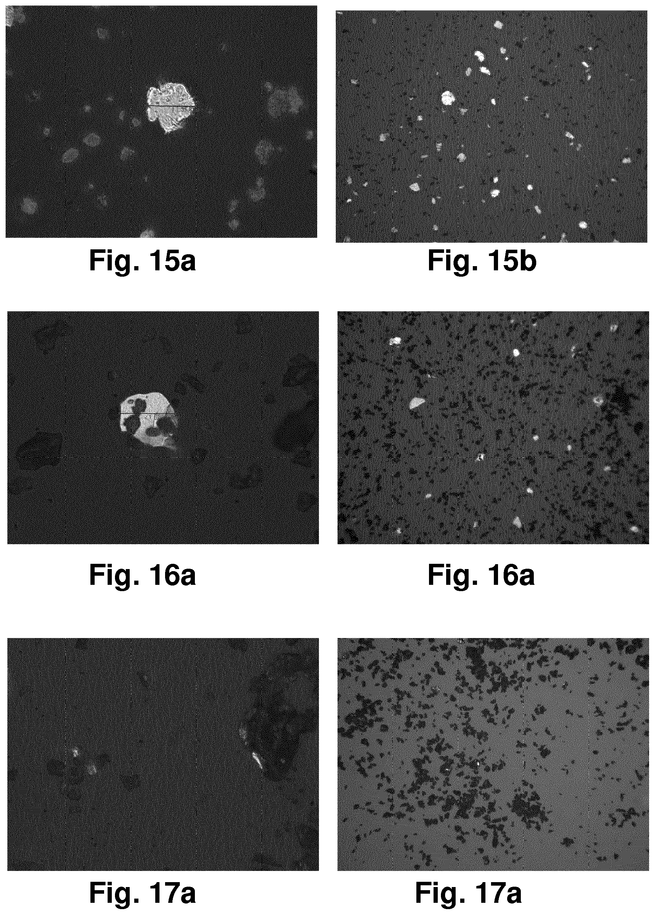

In den Figuren 15a und b sind je eine mikroskopische Aufnahme von Pulverlack-Pulver nach dem "dry-blend"-Verfahren in unterschiedlicher Vergrösserung, 1500x (Figur 15a) und 250x (Figur 15b) dargestellt. Die Effektpigmente liegen lose verteilt - d.h. ohne Anbindung- zwischen den übrigen Pulverlackpartikeln vor.

In den Figuren 16a und b sind je eine mikroskopische Aufnahme von Pulverlack-Pulver nach dem "bonding"-Verfahren in unterschiedlicher Vergrösserung, 1500x (Figur 16a) und 250x (Figur 16b) dargestellt. Die Effektpigmente sind teilweise mit Pulverlackpartikeln beaufschlagt.

In den Figuren 17a und b sind je eine mikroskopische Aufnahme von Pulverlack-Pulver nach dem erfindungsgemässen Verfahren in unterschiedlicher Vergrösserung, 1500x (Figur 17a) und 250x (Figur 17b) dargestellt. Die Effektpigmente sind im Wesentlichen mit der Lackmatrix umhüllt und aus diesem Grund nur schwer zu erkennen.

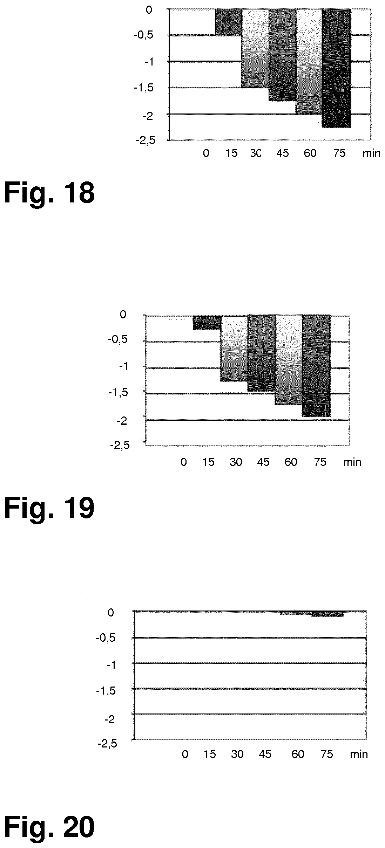

Die Figuren 18, 19 und 20 zeigen eine Darstellung der Rückgewinnungsstabilität nach unterschiedlichen Zeiten (15 min, 30 min, 45 min, 60 min und 75 min) eines Pulverlackes nach dem "dry-blend"-Verfahren (Figur 18), nach dem "bonding"-Verfahren (Figur 19) und eines Pulverlackes hergestellt nach dem erfindungsgemässen Verfahren (Figur 20). Der Farbton und die Effektstabilität werden in einem standardisierten Rückgewinnungsversuch bestimmt. "dry-blend"-Pulverlacke zeigen bereits nach einer 15 minütigen Beanspruchung im Pulverlackkreislauf deutliche Farbton und Effektverschiebungen. Nach dem "bonding"-Verfahren hergestellte Pulverlacke zeigen nach einer 30 minütigen Beanspruchung im Pulverlackkreislauf deutliche Farbton und Effektverschiebungen. Sie sind jedoch stabiler in den Rückgewinnungseigenschaften als "dry-blend"-Pulverlacke. Die nach dem erfindungsgemässen Verfahren hergestellten Pulverlacke zeigen eine signifikant höhere Rückgewinnungsstabilität als die beiden andern Pulverlacke. Die Farbton und Effektverschiebungen sind auch nach einer Zeitdauer von 75 Minuten nur minimal zu erkennen. Für den Rückgewinnungsversuch werde beispielsweise eine Anlage und Applikationsparameter gemäss nachfolgender Tabelle verwendet.

| **Beschreibung Gerätschaften** | |
|---|---|
| Hersteller Automatikbeschichtungsanlage | Gema Switzerland GmbH |
| Art der Automatikbeschichtungsanlage | Stahl kabine/Edelstahl |
| Bezeichnung der Automatikbeschichtungsanlage | BV 01 40 - 14 - 180 |
| Rückgewinnungseinheit | Mono- Zyklon ZR1150G |
| Absaugleistung der Rückgewinnungseinheit | 10000m ³/h |
| Pulverrückführung über Propfenförderung | Gema Switzerland GmbH |
| Hersteller Pulverförderbehälter | J. Wagner GmbH |
| Bezeichnung Pulverförderbehälter | L 25 Behälter |
| Besonderheiten Pulverförderbehälter | Rundbehälter mit Fluidisierung |
| Bei der Prüfung/Einfüllmenge Pulver | 5000 gramm |
| Pulverförderung Pumpe | Injektor/Venturiprinzip |
| Hersteller Pulverpumpe/Applikation | Gema Switzerland GmbH |
| Bezeichnung Pulverpumpe/Applikation | OptiFlow IG02 |
| Bezeichnung Pulverschlauch/Applikation | POE- Pulverschlauch mit Erdungslitze |
| Hersteller Pulverschlauch/Applikation | Huber-Suhner/Gema Switzerland GmbH |
| Innendurchmesser Pulverschlauch/Applikation | 11 mm |
| Länge Pulverschlauch/Applikation | 8 Meter |
| Hersteller Pulverpistole/Applikation | Gema Switzerland GmbH |
| Bezeichnung Pulverpistole/Applikation | OptiGun / TYP GA02 |
| Pistolenausrüstung (Düse)/Applikation | Flachstrahldüse |
| Pistolensteuerung/Applikation | OptiStar CG06 |
| | |

| **Prüfmittel und Parameter** | |
|---|---|
| Prüfbleche | Q-Pannels A5 / Alublech-Chromatiert |
| Prüfdauer | 75 Minuten |
| Pulverausstoss für den Kreislaufbetrieb | ca. 280 gramm/minute |
| Parameter für Kreislaufbetrieb = 280 gr/min | FL = 100 %, GL = 4,0m³/h, KV = ohne |
| | |

| **Beschichtung von Prüfblechen** | |
|---|---|
| Start Prüfung | Prüfblech mit Frischpulver |
| nach 15 Minuten = ca. 0,8 Umläufe / im Zyklon | Prüfblech mit Rückgewinnungspulver |
| nach 30 Minuten = ca. 1,7 Umläufe / im Zyklon | Prüfblech mit Rückgewinnungspulver |
| nach 45 Minuten = ca. 2,5 Umläufe / im Zyklon | Prüfblech mit Rückgewinnungspulver |
| nach 60 Minuten = ca. 3,4 Umläufe / im Zyklon | Prüfblech mit Rückgewinnungspulver |
| nach 75 Minuten = ca. 4,2 Umläufe / im Zyklon | Prüfblech mit Rückgewinnungspulver |
| | |

| **Applikationsparameter für Prüfbleche** | |
|---|---|
| Automatikpistolen | 1 x OptiGun / TYP GA02 |
| Förderluft (FL) | 20% |
| Gesamtluft (GL) | 4,0m³/h |
| Zerstäuberluft (ZL) | 0,3m³/h |
| Hochspannung (KV) | 80 |
| Strombegrenzung (µA) | 80 |
| Sprühabstand | 250mm |
| Hubhöhe | 620mm |
| Hubgeschwindigkeit | 0,23m/sek |
| Transportgeschwindigkeit / Prüfblech | 1,2m/min |

## Patentansprüche

1. Pulverlack in partikulärer Form umfassend eine filmbildende Lackmatrix, wobei die Lackmatrix die zusammenvermischten Ausgangsstoffe des Pulverlacks ausgenommen Effektpigmente ist, und Effektpigmente (1),
wobei die Effektpigmente ausgewählt sind aus der Liste umfassend Metalleffektpigmente, Perlglanzpigmente oder Interferenzpigmente, Leuchtpigmente, Edelstahlpigmente, Kupferpigmente, Goldbronzepigmente, Glasflakes, Glashohlkugeln, Aluminiumpigmente,
wobei die Effektpigmente (1) wenigstens zu 50%, insbesondere wenigstens zu 75%, bevorzugt wenigstens zu 90% mit der filmbildenden Lackmatrix benetzt und umhüllt sind,
wobei die Grösse der Effektpigmente (1) einer Normalverteilung mit einem Mittelwert und einer Standardabweichung kleiner oder gleich 50%, insbesondere kleiner oder gleich 30%, bevorzugt kleiner oder gleich 10%, des Mittelwerts entspricht.

2. Pulverlack nach Anspruch 1, **dadurch gekennzeichnet, dass** wenigstens 80 %, insbesondere wenigstens 90 %, bevorzugt wenigstens 95 % der Effektpigmente (1) mit der Lackmatrix benetzt sind.

3. Pulverlack nach Anspruch 1 oder 2, **dadurch gekennzeichnet, dass** die Grösse der Effektpigmente (1) einen Mittelwert zwischen 5 µm und 120 µm aufweisen.

4. Pulverlack nach einem der vorhergehenden Ansprüche, **dadurch gekennzeichnet, dass** weniger als 40%, insbesondere weniger las 20%, bevorzugt weniger als 10%, der Effektpigmente (1) eine Bruchkante (2) aufweisen.

5. Pulverlack nach einem der vorhergehenden Ansprüche, **dadurch gekennzeichnet, dass** der Volumenanteil der Effektpigmente (1) zwischen 1% bis 50%, insbesondere zwischen 1% bis 30%, bevorzugt zwischen 1% bis 10% vom Gesamtvolumen des Pulverlackes beträgt.

6. Pulverlack nach einem der Ansprüche 1 bis 5, **dadurch gekennzeichnet, dass** eine mit dem Pulverlack hergestellte Schicht eine Natronlaugenbeständigkeit der Stufe 1 nach einer Einwirkzeit von 30 min, der Stufe 1 bis Stufe 2 nach einer Einwirkzeit von 60 min und der Stufe 1 bis Stufe 3 nach einer Einwirkzeit von 90 min und 120 min zeigt.

7. Pulverlack nach einem der Ansprüche 1 bis 6, **dadurch gekennzeichnet, dass** die Lackmatrix Farbmittel aufweist.

8. Pulverlack in ausgehärteter Form hergestellt aus Pulverlack gemäss einem der Ansprüche 1 bis 7.

9. Verfahren zur Herstellung von Pulverlack mit Effektpigmenten (1), insbesondere nach einem der Ansprüche 1 bis 7,
wobei die Effektpigmente ausgewählt sind aus der Liste umfassend Metalleffektpigmente, Perlglanzpigmente oder Interferenzpigmente, Leuchtpigmente, Edelstahlpigmente, Kupferpigmente, Goldbronzepigmente, Glasflakes, Glashohlkugeln, Aluminiumpigmente,
wobei mittels eines Extruders (10) eine homogene thermoplastische Lackmasse aus den Ausgangsstoffen, insbesondere umfassend Bindemittel, Additive, Farbmittel und/oder Füllstoffe, hergestellt wird und die Lackmasse nach dem Verlassen des Extruders (10) vermahlen wird,
**dadurch gekennzeichnet, dass** die Effektpigmente (1) in einem Endbereich des Extruders (10) zugegeben und in der viskosen Lackmasse dispergiert werden und
wobei die Effektpigmente (1) gravimetrisch oder volumetrisch dosiert zugegeben werden.

10. Verfahren nach Anspruch 9, **dadurch gekennzeichnet, dass** die Effektpigmente (1) unter Schutzgas, insbesondere unter Stickstoff, zugegeben werden.

11. Verfahren nach Anspruch 9 oder 10, **dadurch gekennzeichnet, dass** die Ausgangsstoffe Farbmittel umfassen.

## Claims

1. Powder coating material in particulate form, comprising a film-forming coating matrix, where the coating matrix is the blended starting materials of the powder coating material except for effect pigments, and effect pigments (1),
where the effect pigments are selected from the list encompassing metallic effect pigments, pearlescent pigments or interference pigments, luminescent pigments, stainless steel pigments, copper pigments, gold bronze pigments, glass flakes, hollow glass spheres, aluminium pigments,
where the effect pigments (1) are wetted and enveloped to an extent at least of 50%, more particularly at least of 75%, preferably at least of 90%, with the film-forming coating matrix,
where the size of the effect pigments (1) corresponds to a standard distribution having a mean and a standard deviation of less than or equal to 50%, more particularly less than or equal to 30%, preferably less than or equal to 10% of the mean.

2. Powder coating material according to Claim 1, **characterized in that** at least 80%, more particularly at least 90%, preferably at least 95% of the effect pigments (1) are wetted with the coating matrix.

3. Powder coating material according to Claim 1 or 2, **characterized in that** the effect pigments (1) have a mean size of between 5 µm and 120 µm.

4. Powder coating material according to any of the preceding claims, **characterized in that** less than 40%, more particularly less than 20%, preferably less than 10% of the effect pigments (1) have a broken edge (2).

5. Powder coating material according to any of the preceding claims, **characterized in that** the volume fraction of the effect pigments (1) is between 1% to 50%, more particularly between 1% to 30%, preferably between 1% to 10% of the total volume of the powder coating material.

6. Powder coating material according to any of Claims 1 to 5, **characterized in that** a layer produced with the powder coating material exhibits a soda lye resistance of stage 1 after an exposure time of 30 min, of stage 1 to stage 2 after an exposure time of 60 min and of stage 1 to stage 3 after an exposure time of 90 min and 120 min.

7. Powder coating material according to any of Claims 1 to 6, **characterized in that** the coating matrix comprises colorants.

8. Powder coating in cured form produced from powder coating material according to any of Claims 1 to 7.

9. Method for producing powder coating material with effect pigments (1), more particularly according to any of Claims 1 to 7,
where the effect pigments are selected from the list encompassing metallic effect pigments, pearlescent pigments or interference pigments, luminescent pigments, stainless steel pigments, copper pigments, gold bronze pigments, glass flakes, hollow glass spheres, aluminium pigments,
where an extruder (10) is used to produce a homogeneous thermoplastic coating compound from the starting materials, more particularly encompassing binders, additives, colorants and/or fillers, and the coating compound, after leaving the extruder (10), is ground,
**characterized in that** the effect pigments (1) are added in an end region of the extruder (10) and are dispersed in the viscous coating compound, and
where the effect pigments (1) are added with gravimetric or volumetric metering.

10. Method according to Claim 9, **characterized in that** the effect pigments (1) are added under inert gas, more particularly under nitrogen.

11. Method according to Claim 9 or 10, **characterized in that** the starting materials include colorants.

## Revendications

1. Vernis en poudre sous forme particulaire, comprenant une matrice de vernis filmogène, la matrice de vernis consistant en les matières premières mélangées du vernis en poudre à l'exception des pigments à effet, et des pigments à effet (1),
les pigments à effet étant choisis dans la liste comprenant les pigments à effet métallique, les pigments nacrés ou les pigments à interférence, les pigments lumineux, les pigments à base d'acier inoxydable, les pigments à base de cuivre, les pigments à base de bronze doré, les flocons de verre, les billes creuses de verre, les pigments à base d'aluminium,
les pigments à effet (1) étant mouillés et enrobés à hauteur d'au moins 50 %, notamment à hauteur d'au moins 75 %, de préférence à hauteur d'au moins 90 %, avec la matrice de vernis filmogène,
la taille des pigments à effet (1) correspondant à une distribution normale ayant une valeur moyenne et un écart-type inférieur ou égal à 50 %, notamment inférieur ou égal à 30 %, de préférence inférieur ou égal à 10 %, de la valeur moyenne.

2. Vernis en poudre selon la revendication 1, **caractérisé en ce qu'**au moins 80 %, notamment au moins 90 %, de préférence au moins 95 %, des pigments à effet (1) sont mouillés avec la matrice de vernis.

3. Vernis en poudre selon la revendication 1 ou 2, **caractérisé en ce que** les tailles des pigments à effet (1) présentent une valeur moyenne comprise entre 5 µm et 120 µm.

4. Vernis en poudre selon l'une quelconque des revendications précédentes, **caractérisé en ce que** moins de 40 %, notamment moins de 20 %, de préférence moins de 10 %, des pigments à effet (1) présentent une arête de rupture (2).

5. Vernis en poudre selon l'une quelconque des revendications précédentes, **caractérisé en ce que** la proportion volumique des pigments à effet (1) est comprise entre 1 % et 50 %, notamment entre 1 % et 30 %, de préférence entre 1 % et 10 % du volume total du vernis en poudre.

6. Vernis en poudre selon l'une quelconque des revendications 1 à 5, **caractérisé en ce qu'**une couche fabriquée avec le vernis en poudre présente une résistance à la soude caustique de niveau 1 après un temps d'action de 30 minutes, de niveau 1 à niveau 2 après un temps d'action de 60 minutes, et de niveau 1 à niveau 3 après un temps d'action de 90 minutes et 120 minutes.

7. Vernis en poudre selon l'une quelconque des revendications 1 à 6, **caractérisé en ce que** la matrice de vernis comprend des colorants.

8. Vernis en poudre sous forme durcie, fabriqué à partir d'un vernis en poudre selon l'une quelconque des revendications 1 à 7.

9. Procédé de fabrication d'un vernis en poudre comprenant des pigments à effet (1), notamment selon l'une quelconque des revendications 1 à 7,
les pigments à effet étant choisis dans la liste comprenant les pigments à effet métallique, les pigments nacrés ou les pigments à interférence, les pigments lumineux, les pigments à base d'acier inoxydable, les pigments à base de cuivre, les pigments à base de bronze doré, les flocons de verre, les billes creuses de verre, les pigments à base d'aluminium, selon lequel une masse de vernis thermoplastique homogène est fabriquée à partir des matières premières au moyen d'une extrudeuse (10), notamment comprenant des liants, des additifs, des colorants et/ou des charges, et la masse de vernis est broyée après la sortie de l'extrudeuse (10),
**caractérisé en ce que** les pigments à effet (1) sont ajoutés et dispersés dans la masse de vernis visqueuse dans une zone d'extrémité de l'extrudeuse (10), et
les pigments à effet (1) sont ajoutés sous forme dosée par gravimétrie ou volumétrie.

10. Procédé selon la revendication 9, **caractérisé en ce que** les pigments à effet (1) sont ajoutés sous un gaz protecteur, notamment sous de l'azote.

11. Procédé selon la revendication 9 ou 10, **caractérisé en ce que** les matières premières comprennent des colorants.
